Europäisches Patentamt

European Patent Office

Office européen des brevets

(11) Publication number: **0 203 745**
**A1**

# EUROPEAN PATENT APPLICATION

(21) Application number: 86303474.0

(51) Int. Cl.⁴: **A 22 C 11/02**

(22) Date of filing: **07.05.86**

(30) Priority: **08.05.85 JP 97334/85**

(43) Date of publication of application: **03.12.86**
**Bulletin 86/49**

(84) Designated Contracting States: **CH DE LI NL SE**

(71) Applicant: **FUTABADENKI KOGYO KABUSHIKI KAISHI,**
**9-54, Tagawa 3-chome, Yodogawaku Osaka (JP)**

(72) Inventor: **Kawai, Keiichi, c/o Futabadenki Kogyo**
**K.K. 9-54, Tagawa 3-chome, Yodogawaku Osaka (JP)**
Inventor: **Yasuda, Setsuo, c/o Futabadenki Kogyo**
**K.K. 9-54, Tagawa 3-chome, Yodogawaku Osaka (JP)**
Inventor: **Sakaime, Zenichiro, c/o Futabadenki Kogyo**
**K.K. 9-54, Tagawa 3-chome, Yodogawaku Osaka (JP)**

(74) Representative: **Topps, Ronald et al, D. YOUNG &**
**CO 10 Staple Inn, London WC1V 7RD (GB)**

(54) Apparatus for automatically stuffing meat into a casing.

(57) An apparatus for automatically stuffing meat (M) in a casing (6), the apparatus comprising a meat extruder (1) including a filling nozzle (4); means (5) for supplying a length of casing material (6); a carrier (7) for carrying the casing (6) from the supply means (5) to the filling nozzle (4), wherein the carrier (7) includes a stop unit (10) whereby the casing (6) is secured to the carrier (7) so as to effect the unitary movement thereof; a casing holder (13) for holding the open end of the casing (6) on the open end of the filling nozzle (4); a first cutting-and-fastening device (14) located at the casing supply side; and a second cutting-and-fastening device (15) located at the casing outlet side, wherein the second device (14) is adjustable with respect to the first device (15).

1

# APPARATUS FOR AUTOMATICALLY STUFFING
## MEAT INTO A CASING

The present invention relates to apparatus for automatically stuffing meat into casings, such as sausage skins.

The inventor invented an automatic apparatus of this kind for which Japanese Patent No. 819,273 and U.S. Patent No. 3,917,739 have been granted. In the prior invention casing material is carried by a carrier guided along an elongated frame extending from a point adjacent to the filling nozzle of a meat extruder. The casing material is held on the filling nozzle while the carrier is returned to its starting position, during which meat is extruded into the casing. When the predetermined quantity of meat has been extruded, the casing is cut away from the subsequent portion, and both open ends of the severed casing are automatically fastened to form a cased meat, such as a sausage, by means of a first and second cutting-and-fastening devices.

In the prior invention the positions of the first and second cutting-and-fastening devices are not adjustable with respect to each other, so that a particular apparatus is only applicable to a particular length of meat. This limits the usefullness of the apparatus.

The present invention provides an improved automatic apparatus for producing stuffed meat, the apparatus having a cutting-and-fastening device adjustable with respect to another, so that the distance between the two cutting-and-fastening devices can be adjusted as desired.

According to the present invention there is provided an apparatus for automatically stuffing meat into a casing, the apparatus comprising:

a meat extruder including a filling nozzle;

means for supplying a length of casing material;

a carrier for carrying the casing material from the supply means to the filling nozzle, wherein the carrier includes a stop unit whereby the casing material is secured to the carrier so as to effect the unitary movement thereof;

a casing holder for holding the open end of the casing on the open end

of the filling nozzle;

a first cutting-and-fastening device located at the casing supply side; and

a second cutting-and-fastening device located at the casing outlet side, wherein the second device is adjustable with respect to the first device.

An embodiment of the invention will now be described, by way of an example, with reference to the accompanying drawings, in which:-

Figure 1 is a front view of an apparatus embodying the present invention,

Figure 2 is a front view showing the apparatus in operation,

Figure 3 is a plan view on a larger scale showing a main section of the apparatus; and

Figure 4 is a cross-sectional view on a larger scale showing an operational relationship between the carrier and the stop units.

The reference numeral 1 denotes generally a meat extruder, which includes a filling nozzle 4 and a pusher 3 for extruding meat (M) stored in a hopper 2. A continuous band of casing material 6 is wound around a reel 5. There is provided a carrier 7 which reciprocally moves along guide rails 11 and 12 extending axially of the filling nozzle 4. The carrier 7 starts from a point near the filling nozzle 4.

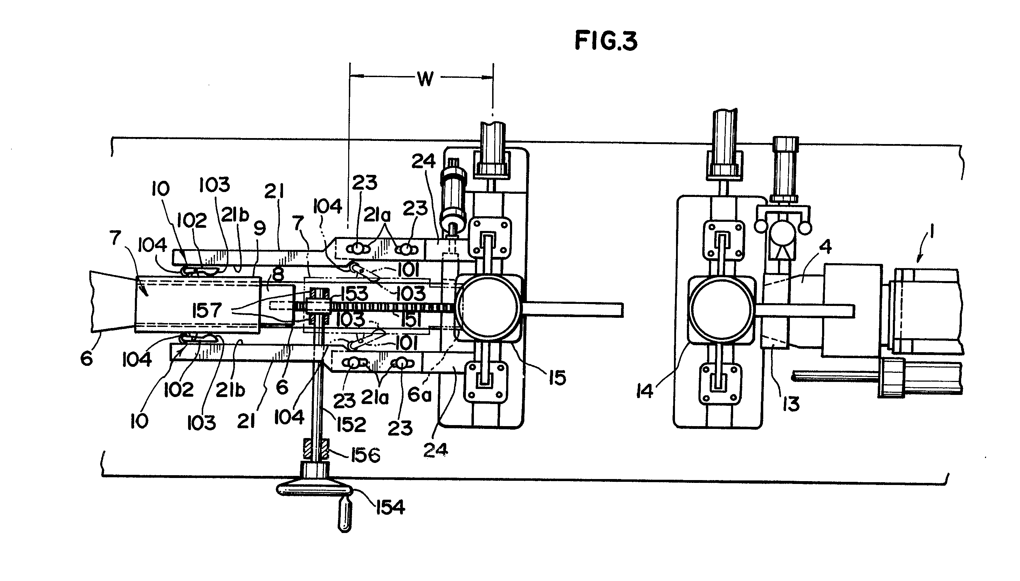

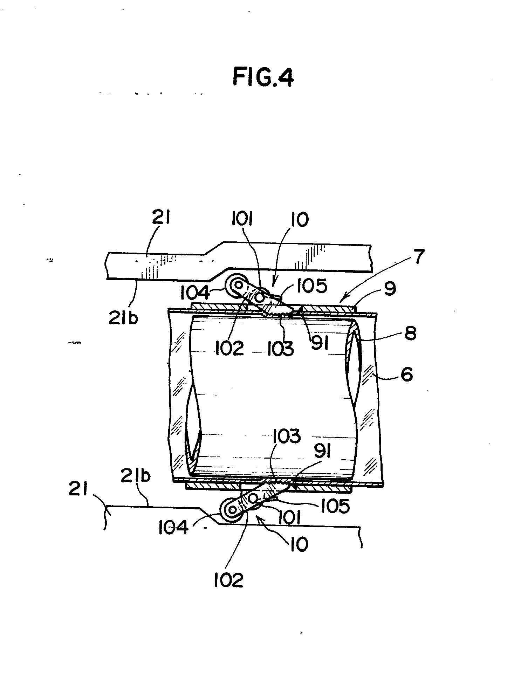

The carrier 7 includes an inner cylinder 8 and an outer cylinder 9 (Figure 4). There are provided a pair of stop units 10, each of which includes a bracket 101 fixed to the outer cylinder 9, an arm 102 pivotally supported on the bracket 101, the arm 102 being provided with teeth 103 formed in its top end, a roller 104 provided at the opposite end of the arm 102 to the teeth 103, and a spring 105 biases the arm 102 so that the teeth 103 are urged towards the inner cylinder 8 and pass through an aperture 91 provided in the outer cylinder 9, thereby enabling the teeth 103 to come into contact with the casing material 6 on the inner cylinder 8 as shown in Figure 4. When the teeth 103 are placed in contact with the casing material 6 as shown in Figure 4 (hereinafter referred to as the locking position), the carrier 7 can move only to the left. If the carrier 7 is caused to move to the right, the teeth 103 bites into the casing material 6, and secures it on the outside of the carrier 7. When the teeth 103 come out of contact with the casing material 6 (Figure 3), hereinafter referred to the unlocking position, the casing material 6 is released from the carrier 7. When each arm 102 is at the locking position, and the carrier 7 is caused to move to the right, the casing 6 is pulled out from the reel 5.

The reference numeral 13 denotes a casing holder provided around the periphery of the filling nozzle 4.

There are provided cutting-and-fastening devices 14 and 15 which cut the casing material 6 having meat stuffed therein, and fasten both end of the severed casing. The device 14 is fixed to the machine body, adjacent to the filling nozzle 4, and the device 15 is movably provided midway along the guide rails 11 and 12. The device 15 includes a rack 151, and a pinion 153 is engageable therewith, the pinion being fixed to a rotating shaft 152 carried in bearings 156, 157. The shaft 152 is turned by a handle 154, which is rotatable in either direction. The device 15 is moved along a guide key 155 to the left or right in accordance with the direction of rotation of the handle 154. In this way the device 15 is reciprocally movable over a predetermined distance.

The reference numeral 16 denotes a stretching-and-supplying device for putting the stuffed casing material into shape. The stretching-and-supplying device 16 includes a pair of chucks 17, 18, one being located at the casing supply side, and the other being located at the casing outlet side. A rod 19 is provided therebetween in such a manner as to project and withdraw with respect to the casing material 6, and guide rollers 20 are located at the sides opposite to the rod 19.

The reference numeral 21 denotes cam plates. As clearly shown in Figure 3, each cam plate 21 includes an end portion having lengthwise elongate holes 21a therein through which bolts 23 extend which are anchored to a fixture plate 24 integral with the device 15. The cam plates 21 are provided on either side but outside the path of the carrier 7.

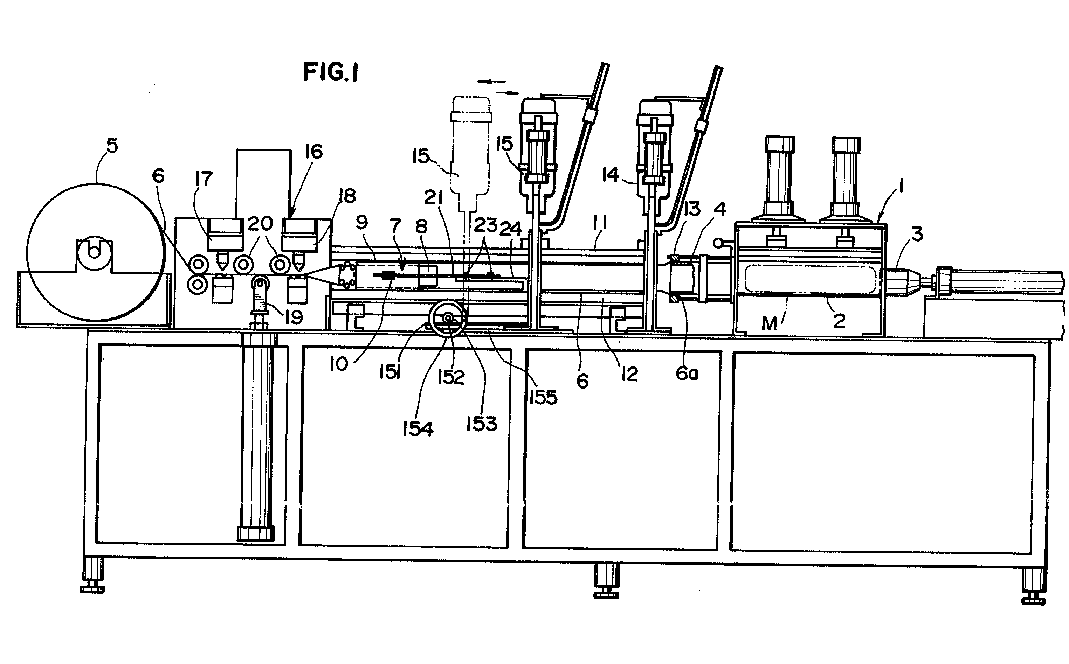

In operation, the casing material 6 is carried to the filling nozzle 4 by means of the carrier 7, and its open end 6a is caused to ride on the open end of the nozzle 4, where the casing material 6 is held by the casing holder 13. This is as shown in Figure 1.

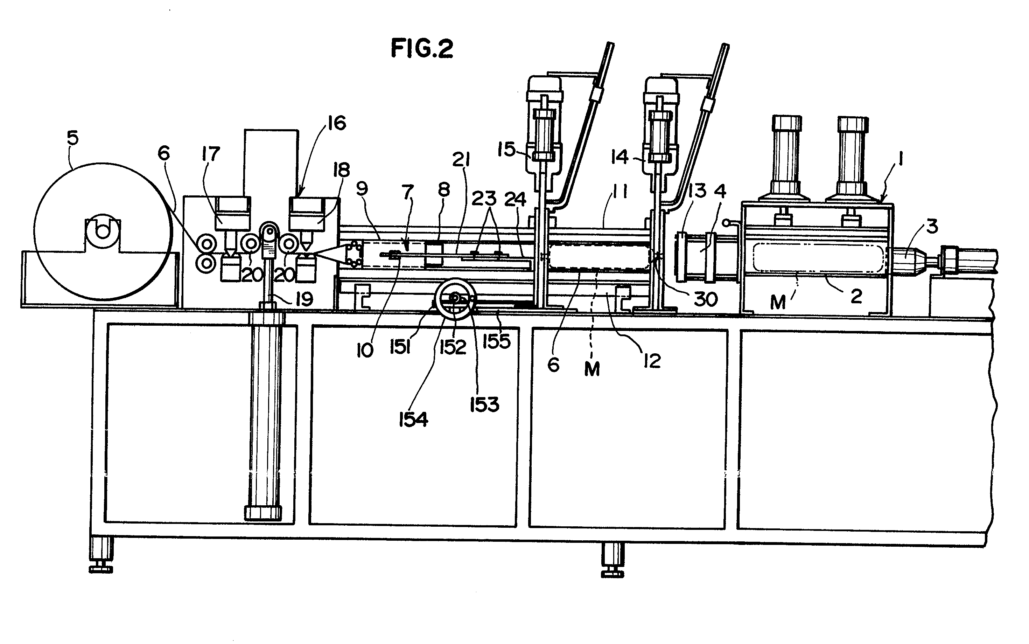

The meat M is stored in the hopper 2, and extruded into the casing 6 through the filling nozzle 4 by means of the pusher 3 until the casing 6 is stuffed with a predetermined amount of meat. The carrier 7 is returned to its starting position shown in Figure 2.

After the casing material 6 is stuffed with the meat M, the casing is released from the holder 13, and the first cutting-and-fastening device 14 is actuated to fasten the open end 6a of the casing 6 with a ring 30. Then the chuck 17 of the stretching-and-supplying device 16 holds the stuffed casing 6, and the rod 19 is raised, thereby stretching the casing 6 toward the casing supply side. Since the casing 6 is pulled back, it is placed in tight contact with the meat, thereby expelling any extrapped air present between the casing 6 and the meat M.

During the operation of the second cutting-and-fastening device 15 another chuck 18 holds the stuffed casing 6, whereas the chuck 17 is made free from the casing material 6. At this stage the rod 19 is further raised, thereby pulling a fresh casing for the next stuffing operation. When a predetermined length of the casing material 6 is pulled out, the casing is released from the second chuck 18, and the rod 19 lowers to its original position. At this moment the carrier 7 is at the waiting position indicated by the full lines in Figure 3. When the casing 6 starts to advance, the stop units 10 are kept at the unlocking positions until the top end of the carrier 7 moves to a point near the open end 6a of the casing 6. When the carrier 7 is at the position indicated by phantom lines in Figure 3, the stop units 10 are displaced to the locking position by means of the cam plates 21, thereby securing the casing material 6 to the carrier 7. In this way the casing material 6 is pulled from the reel 5, and the carrier 7 advances to a point near the filling nozzle 4, where its open end 6a is caused to ride on the nozzle 4. Then the carrier 7 is withdrawn to take the position shown in Figure 1. The same procedure will be repeated.

In the above-mentioned stuffing operation the lengths of the casing are adjusted as desired in the following manner:

The handle 154 is turned so as to move the second cutting-and-fastening device 15 toward the first device in this way the distance therebetween is shortened.

When the carrier 7 starts from the position shown in Figures 1 and 3, the teeth 103 of the stop units 10 are made free from the casing material 6 in the initial course of movement of the carrier 7. This is effected by the rollers 104 being oppressed by the cam face 21B. However, when the rollers 104 come out of contact with the cam face 21b as seen in Figure 4, the arms 102 are biased toward the carrier 7 until the teeth 103 are engaged with the casing material 6, thereby securing the casing material 6 to the carrier 7. When the carrier 7 moves, the casing material 6 is pulled in the same direction. Since the cam plates 21 are fixed to the second device 15, the distance (W) between the second device 15 and the terminating end of the cam plate 21b is constant regardless of the positions of the second device 15. This ensures that the length of the casing portion which protrudes from the point at which the casing is held by the stop units 10 is constant, which means that the casing portion of the constant same length rides on the filling nozzle 4. This avoids any wastage of the casing material 6. The cam plate 21 can be adjusted in position with respect to the second cutting-and-fastening device 15 by loosening the bolts 23, thereby changing the distance (W) between the second device 15 and the terminating end of the cam face 21b, and controlling the timing for placing the stop units 10 into the locking position.

As evident from the foregoing description, the second cutting-and-fastening device 15 can be moved with respect to the stationary first device 14, thereby producing various lengths of stuffed casings. The length of the casing portion which rides on the filling nozzle is constant, thereby avoiding the waste of casing regardless of the fact that the second cutting-and-fastening device 15 is adjustable. This leads to the economy of the production. When the stretching-and-supplying device 16 is used in combination with the apparatus, the stuffing operation can be performed in a relatively short period of time.

## CLAIMS

1.  An apparatus for automatically stuffing meat into a casing, the apparatus comprising:

a meat extruder (1) including a filling nozzle (4);

means (5) for supplying a length of casing material (6);

a carrier (7) for carrying the casing material (6) from the supply means (5) to the filling nozzle (4), wherein the carrier (7) includes a stop unit (10) whereby the casing material (6) is secured to the carrier (7) so as to effect the unitary movement thereof;

a casing holder (13) for holding the open end of the casing (6) on the open end of the filling nozzle (4);

a first cutting-and-fastening device (14) located at the casing supply side; and

a second cutting-and-fastening device (15) located at the casing outlet side, wherein the second device (15) is adjustable with respect to the first device (14).

2.  An apparatus as claimed in claim 1, wherein the second cutting-and-fastening device (15) includes a cam plate (21) which has a cam face whereby the stop unit (10) is caused to take a locking position and an unlocking position with respect to the casing (6) against the carrier (7).

FIG.1

# FIG.2

020374 5

**FIG.3**

# FIG.4

8203745

European Patent Office

**EUROPEAN SEARCH REPORT**

Application number

EP 86 30 3474

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| Y | DE-A-2 411 020 (FUTABA) * Page 4, line 7 - page 8, 2nd paragraph * | 1 | A 22 C  11/02 |
| A | | 2 | |
| | --- | | |
| Y | GB-A-1 104 481 (UNITED GAS INDUSTRIES) * Page 5, lines 36-49; claim 1 * | 1 | |
| | --- | | |
| P,A | US-A-4 534 084 (STANLEY) * Whole document * | 1 | |
| | --- | | |
| A | DE-A-2 141 955 (NIEDECKER) | | |
| | --- | | TECHNICAL FIELDS SEARCHED (Int. Cl.4) |
| A | DE-A-3 214 018 (HOECHST) | | A 22 C |
| | --- | | |
| A | EP-A-0 114 707 (NAKAMURA) | | |
| | --- | | |
| A | EP-A-0 114 708 (NAKAMURA) | | |
| | --- | | |
| A | FR-A-2 390 336 (GERHARD) | | |
| | --- | | |

The present search report has been drawn up for all claims

| Place of search | Date of completion of the search | Examiner |
|---|---|---|
| THE HAGUE | 01-08-1986 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family. corresponding document

EPO Form 1503 03 82